# EUROPEAN PATENT SPECIFICATION

(11) **EP 4 443 263 B1**
(45) Date of publication and mention of the grant of the patent: **01.07.2026**
(21) Application number: 23214761.1
(22) Date of filing: 06.12.2023
(51) Int. Cl.: G05D 7/01

(54) **FLOW CONTROL VALVE AND SPA RECIRCULATION SYSTEM WITH HEAT PUMP USING THE VALVE**
DURCHFLUSSREGELVENTIL UND SPA-REZIRKULATIONSSYSTEM MIT WÄRMEPUMPE MIT DEM VENTIL
SOUPAPE DE RÉGULATION DE DÉBIT ET SYSTÈME DE RECIRCULATION DE SPA AVEC POMPE À CHALEUR UTILISANT LA SOUPAPE

(30) Priority: 20.12.2022 US 202263434049 P; 01.02.2023 US 202318104676
(43) Date of publication of application: 09.10.2024
(73) Proprietor: Balboa Water Group, LLC, Costa Mesa, CA 92626 (US)
(72) Inventor: KUO, Steven, Costa Mesa, CA 92626 (US)
(74) Representative: Reddie & Grose LLP

(56) References cited:
- WO-A1-2010/064406
- WO-A1-2017/212613
- WO-A1-2018/142473
- JP-A- 2006 002 960
- JP-A- H10 185 312
- US-A- 3 319 648
- US-A- 3 424 196
- US-A- 3 805 824
- US-A1- 2022 025 666

## Description

### BACKGROUND

Bathing installations such as spas and whirlpool baths typically include water heating systems in recirculating water flow paths to heat the water to desired temperatures. The water heaters may utilize electrical power for heating elements submerged in water.

Cited prior art document US 3,424,196 A discloses a flow regulating valve of the type which functions to maintain a constant flow rate from the inlet to the outlet of the valve regardless of the total pressure drop across the valve.

WO 2018/142473 A1 discloses a heat medium circulation system including a heat pump, a heat storage tank, a bypass passage and a flow control valve. The flow control valve is described as, for example, an electromagnetic three-way valve switchable between shut-off and flow-rate adjustment positions to change the bypass ratio, under control of a controller, in different operating modes (heat supply / heat storage).

Heat pumps have also been employed as water heating and cooling systems, to take advantage of the higher efficiency and save power, resulting in lower electrical costs to operate the system.

Heat pumps typically require an input water flow in a narrow range, e.g. nominal flow rate plus or minus ten percent or so, for optimal efficiency. Further, the input water flow should be less than a maximum flow rate to ensure the heat pump is not damaged over extended use. These constraints have been difficult to achieve.

The present invention addresses these constraints.

### BRIEF DESCRIPTION OF THE DRAWINGS

Features and advantages of the disclosure will readily be appreciated by persons skilled in the art from the following detailed description when read in conjunction with the drawing wherein:
FIG. 1 is a diagrammatical view illustrating an exemplary embodiment of a spa installation employing a heat pump and flow control valve in accordance with aspects of the invention.
FIG. 2 illustrates an exemplary embodiment of a flow control valve for the system of FIG. 1.
FIG. 3 is an exploded view of an exemplary embodiment of a flow control valve.
FIG. 4A is an isometric cutaway view of a flow control valve as in FIG. 3, with a plunger element configured for a low speed or single speed pump. FIG. 4B is an isometric cutaway view similar to FIG. 4A, but with a different plunger element configured for a high speed pump.
FIGS. 5A and 5B illustrate respective flow control valve plungers for low flow and high flow pumps, respectively, in which the orifices have different sizes. FIGS. 5C and 5D are respective end views of the plungers for low and high flow pumps, respectively.

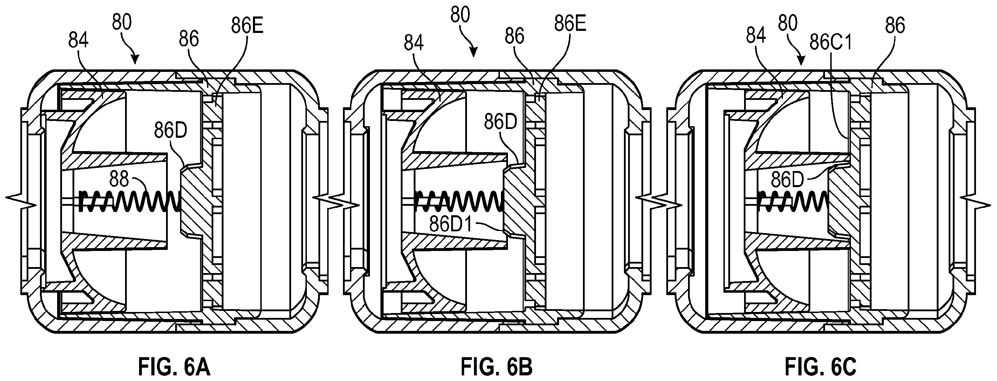

FIG. 6A, 6B and 6C are side cutaway views of an exemplary embodiment of a flow control valve illustrating operation of the valve as water pressure is increased. FIG. 6A illustrates the valve with the plunger in a fully open position relative to the retainer, as the water flow is insufficient to move the plunger against the spring pressure from a fully open position. FIG. 6B illustrates the water flow condition in which the plunger has moved from the fully open position to an intermediate position allowing some water flow, in response to increased water flow. FIG. 6C illustrates the plunger fully seated against the retainer, closing off water flow except for some leakage.

### DETAILED DESCRIPTION

In the following detailed description and in the several figures of the drawing, like elements are identified with like reference numerals. The figures may not be to scale, and relative feature sizes may be exaggerated for illustrative purposes.

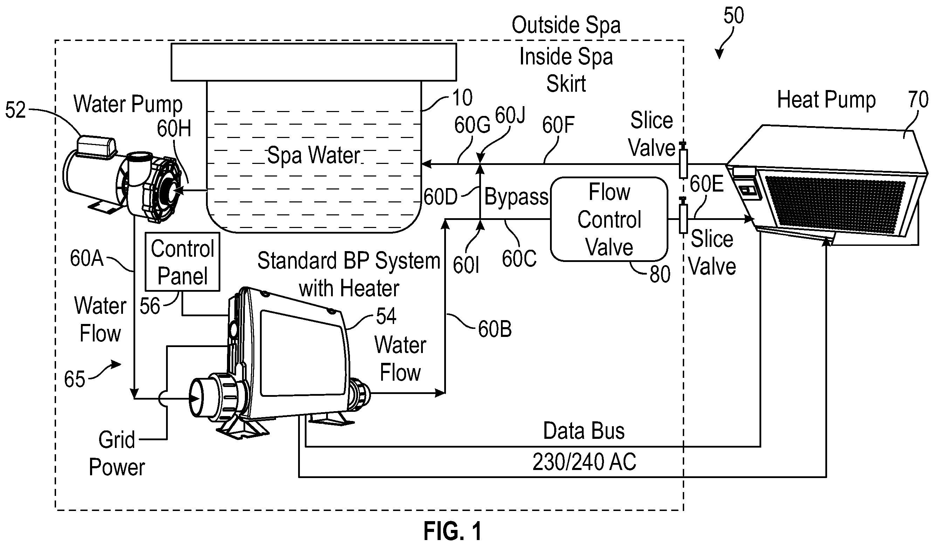

FIG. 1 illustrates an exemplary embodiment of a bathing installation 50 employing aspects of the invention. In this embodiment, the bathing installation is a spa installation, in which a spa tub 10 holds a volume of spa water. The spa tub includes one or more inlet ports such as jets, and an outlet port connected to a suction side of water pump 52. As is well known in the art, the spa typically has a series of jets (not shown) fed by a water manifold (not shown).

A recirculating water flow path 60 formed by pipe segments 60A, 60B ... 60G and 60H delivers heated water to the inlet ports or manifold and draws water from the spa tub. The water may be heated by a spa pack 54 including a controller and an electrode heating element, or by heat pump 70, or both, depending on the mode of operation of the spa system, typically under control of the spa pack controller. Water exiting the spa pack 54 is delivered through a flow control valve 80 to the heat pump 70.

There are several water flow constraints imposed on the system of FIG. 1. One constraint is the minimum required flow rate through the spa pack heater. Other constraints are imposed by the heat pump itself. Heat pumps typically require an input water flow in a narrow range, e.g. a nominal flow rate plus or minus ten percent or so, for optimal efficiency. Further, the input water flow should be less than a maximum flow rate to ensure the heat pump is not damaged over extended use. For a typical installation, the minimum flow through the spa pack heater exceeds the maximum flow rate through the heat pump to prevent damage, as well as the optimal flow rate for the heat pump. A bypass water line 60D may be inserted in the water flow path but how to modulate the bypass flow to meet the several constraints is difficult. When a single-speed circulation pump is used for the water pump, it is difficult for the OEMs (original equipment manufacturers) or installers (when the heat pump is installed after the spa is installed) to measure the water flow to ensure that the constraints for the heat pump are satisfied. In the past, spa installations have employed manually-operated ball valves, not a flow control valve as described below. Two-speed water pumps, commonly used in spa installations in the US and Canada, could not be employed, since when the pump is at low speed, and the required flow rate for optimum efficiency of the heat pump is met, then the maximum flow rate constraint through the heat pump would be violated when the water pump is set to the high speed. And if the ball valve is manually adjusted to protect against the maximum flow rate constraint violation at the high speed, then the optimum efficiency flow rate constraint will be violated (the flow will be too low) when the water pump is set to the low speed. The use of a flow control valve in accordance with aspects of the invention provide a solution to these issues.

The water flow path 60 includes pipe segment 60A connected to the output of water pump 52 and to the input of spa pack 54. Pipe segment 60B connects the output of the spa pack 54 to pipe T fitting 60I, with the through port connected to flow control valve 80 via pipe section 60C. The output of the valve 80 is connected to one end of pipe section 60E, and the other end of the pipe section 60E is connected to the inlet of the heat pump 70. Pipe section 60F connects the output of the heat pump 70 to T fitting 60J. Pipe section 60G connects the through port of fitting 60G to the inlet port of the spa tub. The outlet port of the spa tub is connected by pipe section 60H to the suction side of pump 52.

The spa pack 54 receives electrical power, typically 230/240 V AC (50-60 Hz). The spa pack controls the application of electrical power to the pump 52, the spa pack heater and the heat pump 70. A spa control panel 56 is in electrical communication with the spa pack, and includes a display panel for display of spa information and status as well as user input devices such as a touch screen and/or switches to enter user commands. A data bus is provided between the spa pack and the heat pump, allowing the spa pack controller to control operation of the heat pump as well as to receive status data from the heat pump.

In accordance with aspects of the invention, the flow control valve 80 functions to regulate water flow into the heat pump to a nominal value plus/minus ten percent, when the pump 52 is a single-speed circulation pump. The nominal value is selected to provide optimum efficiency for the heat pump. For one heat pump example, the nominal value is 11.9 gallons per minute (GPM), although this will be dependent on the particular design of the heat pump. For the case in which the water pump 52 is a two-speed pump, and for the pump low speed operation, the flow control valve regulates the water flow to the heat pump to the nominal value plus/minus ten percent. If the water pump is pumping at the high speed, the flow control valve regulates the water flow to the heat pump to be less than a predetermined flow rate which can cause damage to the heat pump. For the example heat pump, that predetermined flow rate is 17.9 GPM. The flow control valve must also operate at a flow rate through the spa pack heater of at least a minimum flow rate to avoid damage to the heater. In an exemplary embodiment of the spa pack heater, the minimum flow rate is 23 GPM.

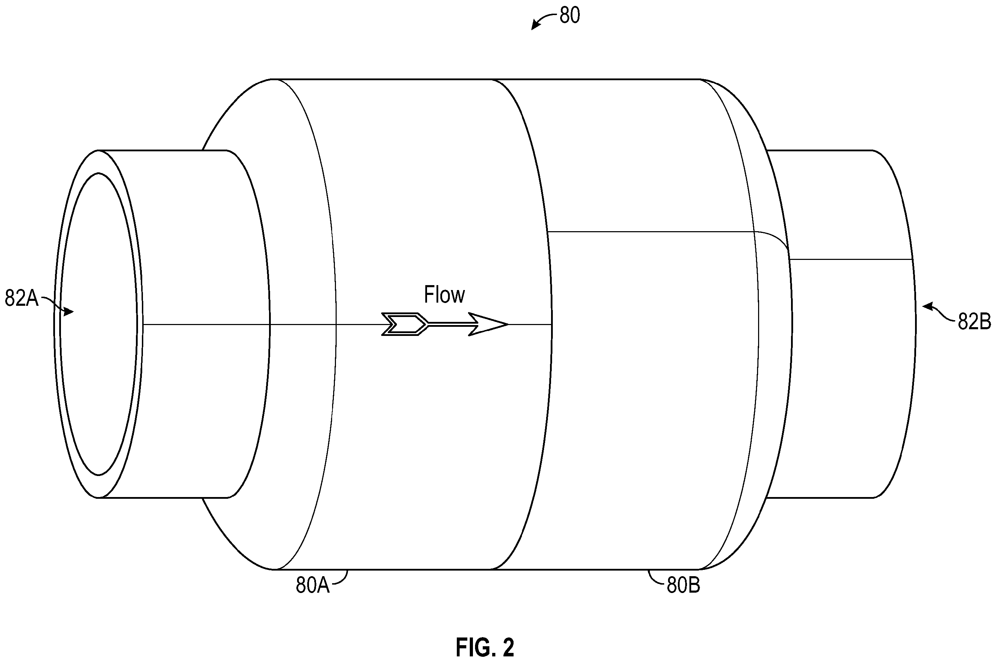

Exemplary embodiments of flow control valve configured to perform these functions are illustrated in FIGS. 2-7C. FIG. 2 is an isometric view of the flow control valve 80. Inlet and outlet ports 82A, 82B are configured to connect to pipe segments of the water flow path. In an exemplary embodiment, the ports accept 2-inch diameter pipes. In an exemplary embodiment, the valve includes a housing formed by housing halves 80A, 80B which are glued together.

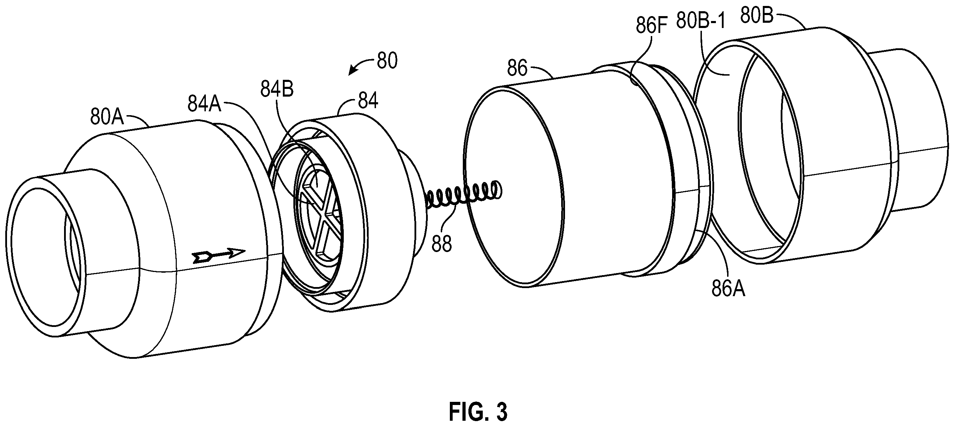

FIG. 3 is an exploded view of the flow control valve of FIG. 2. There are three internal parts of the valve, which are fitted inside the housing 80A, 80B. A plunger structure 84 is configured for sliding movement inside a retainer structure 86 between a fully open position and a closed position. An exemplary dimensional tolerance of the gap between the plunger structure and the retainer structure is 0.015 inch +/- .005 inch. The housing, plunger structure and retainer structure are fabricated of plastic, such as PVC. The plunger structure is biased to the open position by bias structure 88, which in this exemplary embodiment is a spring.

The plunger structure 84 includes a transverse web structure 84A, defining four openings or orifices 84B, through which water flows when the plunger structure is not in the closed position. The size of the orifices is a design parameter. The transverse web structure includes a spring retainer post structure 84K extending toward the transverse structure 86C of the retainer structure.

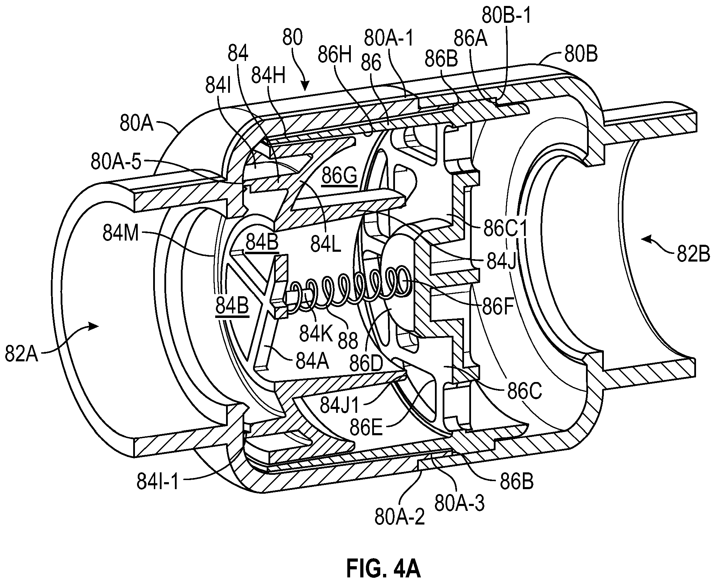

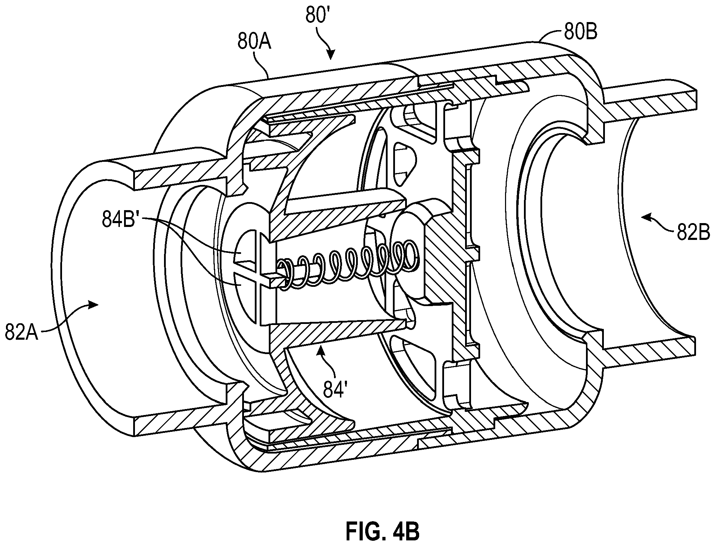

The retainer structure 86 includes an external peripheral shoulder 86A which seats against the internal peripheral shoulder 80B-1 to register the position of the retainer structure relative to the housing 80B (see FIGS. 4A and 4B). An external peripheral shoulder 86B is contacted by surface 80A-3 of the housing half 80A when the housing halves are assembled together, securing the position of the retainer structure 86 within the assembled housing halves 80A, 80B.

The retainer structure 86 further includes a transverse structural portion 86C (FIG. 4A), extending across the interior cavity 86G of the retainer structure. The transverse structural portion has a protruding center boss portion 86D with a spring retainer post 86F extending toward the input opening 82A. The transverse structural portion also has a plurality of peripheral openings 86E through the structure and outside of the center boss portion, which openings permit water flow through the transverse structural portion when the plunger portion 84 is not in the closed position.

The spring 88 is held in position by fitment onto the spring retainer posts 84K and 86F (FIG. 4A).

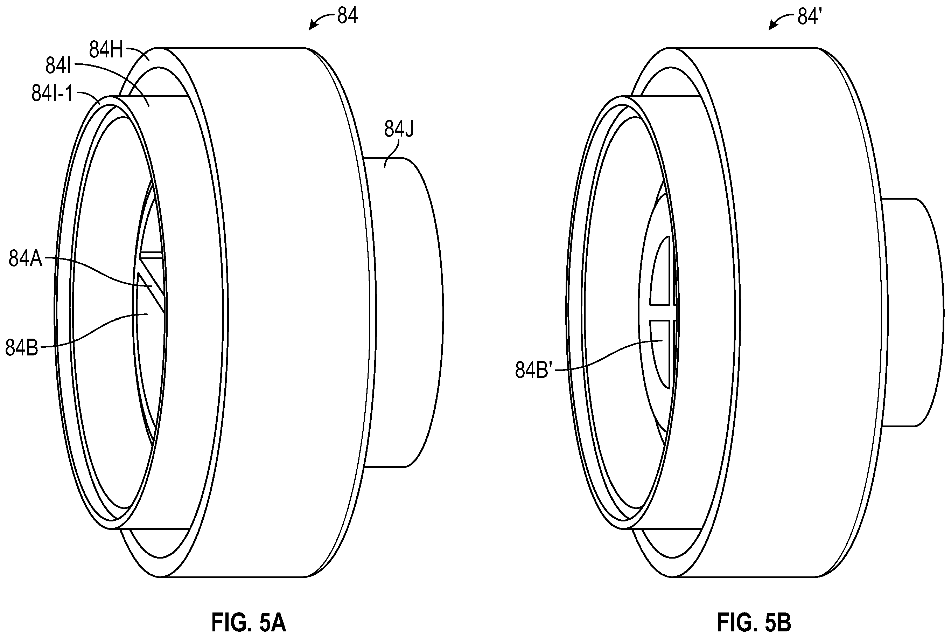

Embodiments of the plunger structure 84 are illustrated in FIGS. 4A-5D. The embodiment of FIGS. 4A and 5A has an outer peripheral cylindrical surface 84H which has an outer diameter sized to fit within the cylindrical surface 86H of the retainer structure 86, with a tolerance designed to allow sliding movement of the plunger structure within the retainer structure, yet without allowing significant water flow in the small gap between the surfaces 84H and 86H. An exemplary tolerance dimension is 0.015 inch. The plunger structure 84 further includes an interior cylindrical surface 841 inboard of surface 84H, and extending from concave surface portion 84L (FIG. 4A). The tip 841-1 of surface 84I protrudes further than the tip of the outer cylindrical surface 84H, and serves as a stop surface against surface 80A-5 of the housing half 80A, defining the open position of the valve.

The plunger structure 84 further includes an interior cylindrical surface 84J extending downwardly from concave surface portion 84L. Surface 84J has a draft for molding purposes, but is a true cylinder otherwise. The distal edge 84J1 of the interior cylindrical surface 84J serves as a stop surface against the solid surface 86C1 of the transverse structure 86C surrounding the boss 86D. With the plunger structure moved toward the outlet port 82A, the distal edge 84J1 will stop against the solid surface 86C1, cutting off flow through the apertures 86E in the transverse structure 86C. This position of the plunger 84 is the off position.

FIG. 4B illustrates another embodiment of the valve 80', which is identical to valve 80 illustrated in FIG. 4A, except that the plunger 84' has smaller orifices 84B' than the orifices 84B of valve 80. The valve 80' of FIG. 4B will allow lower water flow through the valve than valve 80. The size of the orifices is a design parameter, for matching the valve to the water pump capacity, for example. The size of the bypass pipe 60D (FIG. 1) is also another design parameter.

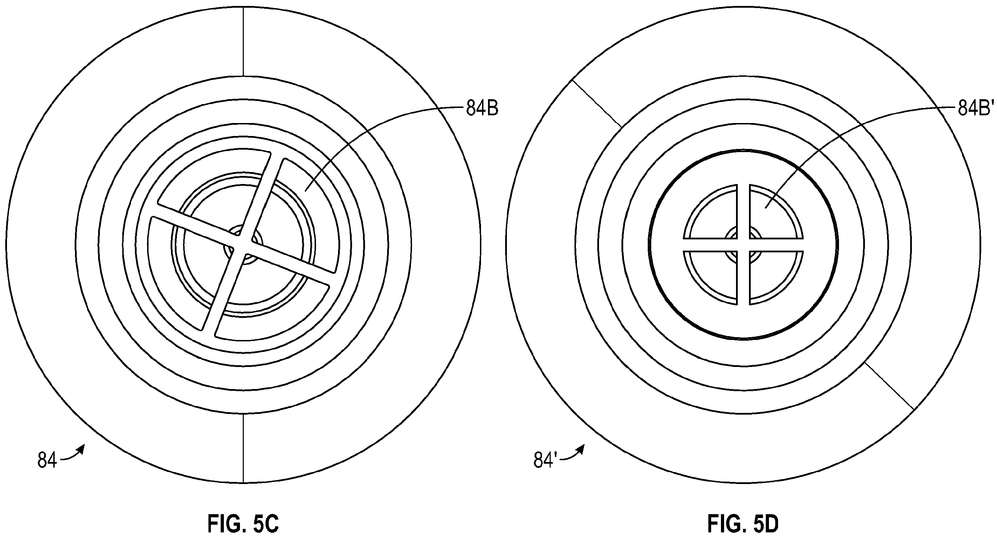

FIGS. 5A and 5B are side isometric views of the respective plungers 84 and 84'. FIGS. 5C and 5D are end views of the respective plungers 84A and 84A', showing the four orifices 84B, 84B' in the respective plungers.

FIGS. 6A, 6B and 6C illustrate the operation of the exemplary flow control valve 80. As the water pressure increases, the plunger 84 will move toward the retainer 86 and control the amount of water that can flow through the valve.

FIG. 6A illustrates the plunger 84 in the fully open position relative to the retainer 86, allowing water flow through the orifice in the plunger, around the boss 86D and through the retainer orifices 86E. The open position occurs when the water flow through the valve 80 is insufficient to overcome the spring bias to compress the spring.

FIG. 6B shows the plunger 84 in an intermediate position relative to the retainer 86, with the distal edge 84J1 of the plunger positioned at the tip 86D1 of the boss 86D, reducing the opening size through which water can flow. To achieve this intermediate position, the water flow rate is increased sufficiently to exert sufficient force to compress the spring 88 to the extent illustrated.

FIG. 6C illustrates the valve 80 with the plunger 84 in the fully closed position, with the spring 88 compressed such that the distal edge 84J1 is positioned against the surface 86C1 of the retainer, effectively closing off the water flow path through the plunger and retainer orifices.

As flow is reduced through the flow control valve 80 to the heat pump (in the spa installation of FIG. 1), the flow through the bypass path (pipe section 60D) back to the spa tub 10 is increased.

The flow control valve 80 is an effective tool to allow easy installation of the heat pump 70 in a bathing installation using either a circulation pump or a two-speed pump. The valve ensures proper flow through the heat pump and alleviates the need for measuring and optimizing flow when installing the heat pump. For example, it has been found that an exemplary flow control valve 80 using a retainer 84 with the larger orifice size can work in a spa system as illustrated in FIG. 1 with a two-speed pump when using 2-inch pipe plumbing, and with a circulation pump when using 1.5 inch pipe plumbing. In this exemplary two-speed pump, the high speed operates on a current draw from 8.8 A to 16.4 A, and the low speed on a current draw from 2 A to 4.4 A. The circulation pump operates on a current draw of 1A to 1.1A.

In a further example, it has been found that an exemplary flow control valve 80' using a retainer 84' with the smaller orifice size can work in a spa system as illustrated in FIG. 1 with a two-speed pump when using 2-inch pipe plumbing, and with a circulation pump when using 2-inch pipe plumbing. In this exemplary two-speed pump, the high speed operates on a current draw from 8.8 A to 16.4 A, and the low speed on a current draw from 1 A to 1.1 A. The circulation pump operates on a current draw of 1A to 1.1A.

## Claims

1. A bathing installation comprising:
a bathing tub (10) for holding bathing water and including one or more water inlet ports and a water outlet port;
a recirculating water flow path (60) connecting the bathing tub inlet port and the bathing tub outlet port;
a water pump (52) connected to the bathing tub output port to pump water through the water flow path;
a heat pump (70) connected in the water flow path for temperature conditioning the bathing water;
the water flow path including a water bypass path (60D) to divert water to the inlet port before reaching the heat pump;
a flow control valve (80) positioned in the recirculating water flow path downstream of the water bypass path and upstream of the heat pump;
the flow control valve comprising:
a housing structure (80A, 80B) having a water input port (82A) and a water output port (82B);
a retainer structure (86) positioned in a fixed position inside the housing structure, the retainer structure including a transverse structure (86C) including one or more retainer orifices (86E);
a plunger structure (84) positioned inside the housing structure and configured for sliding movement inside the retainer structure between an open position relative to the retainer structure and a closed position relative to the retainer structure, the plunger structure defining one or more plunger orifices (84B);
a bias structure (88) configured to bias the plunger structure to the open position in which water flow is permitted through the one or more plunger orifices and the one or more retainer orifices from the input port to the output port, and is configured to allow the plunger structure to slide within the retainer structure in response to increased water pressure applied to the input port, allowing the plunger structure to slide toward the closed position in response to a sufficiently increased pressure, wherein the water flow through the one or more retainer orifices is prevented,
wherein water flow through the valve is regulated dynamically in dependence on the water pressure applied to the valve;
wherein as the water pressure applied to the flow control valve increases, an amount of water diverted to the water bypass path increases to reduce the water flow to the heat pump, the valve serving to maintain the water flow to the heat pump to a given flow for efficient heat pump operation, and to prevent the water flow to the heat pump from exceeding a predetermined maximum water flow that would lead to heat pump damage.

2. The bathing installation of Claim 1, wherein the housing structure includes a cylindrical housing portion in which the retainer structure and plunger structure are positioned.

3. The bathing installation of Claim 2, wherein:
the retainer structure includes a retainer cylindrical surface (86H) dimensioned to fit within the cylindrical portion of the housing structure, the transverse structure (86C) extending across the retainer cylindrical surface;
the plunger structure includes an outer cylindrical surface (84H) configured to slidingly fit within the retainer cylindrical surface with a tolerance, and an inner cylindrical surface (84J) having a distal end (84J1) configured to contact the transverse structure with the plunger structure in the closed position.

4. The bathing installation of Claim 3, wherein the plunger structure (84) further includes:
a transverse web structure (84A) extending across said inner cylindrical surface (84H), said transverse web structure defining said one or more plunger orifices through which water flows through the inner cylindrical surface when the plunger structure is not in the closed position.

5. The bathing installation of Claim 4, wherein:
the bias structure (88) is a spring;
the transverse structure of the retainer structure includes a protruding center boss portion (86D) with a spring retainer post (86F) extending toward the input opening;
the web structure (84A) includes a plunger spring post (84K) extending toward the transverse structure (86C);
the spring having a first end fitted onto the plunger spring post and a second end fitted onto the retainer spring post.

6. The bathing installation according to any preceding claim, wherein the pump is a multiple speed pump operable at a plurality of pump speeds.

7. The bathing installation of Claim 6 44 , wherein the multiple speed pump is a
two-speed pump having a pump low speed and a pump high speed, and wherein, for pump low speed operation, the flow control valve (80) is configured to regulate the water flow to the heat pump to a nominal value plus/minus a nominal tolerance, the nominal value selected for efficient operation of the heat pump, and for pump high speed operation, the flow control valve is configured to regulate the water flow to the heat pump to be less than a predetermined flow rate which can cause damage to the heat pump.

8. The bathing installation of Claim 7, wherein the nominal tolerance is ten percent of the nominal value.

9. The bathing installation according to any preceding claim, further comprising a controller, an electrode heating element disposed in the recirculation flow path, and a control panel (56) responsive to user input commands, and wherein the controller is responsive to the user input commands, and the controller is connected to the heat pump (70) and the electrode heating element and configured to control operation of the heat pump and electrode heating element.

10. The bathing installation of Claim 9, wherein the bathing installation water may be heated by the electrode heating element, or by the heat pump, or both, under control of the controller.

## Patentansprüche

1. Badevorrichtung, die Folgendes umfasst:
eine Badewanne (10) zur Aufnahme von Badewasser, die einen oder mehrere Wasserzulaufanschlüsse und einen Wasserablaufanschluss aufweist;
einen Umlaufwasserströmungsweg (60), der den Zulaufanschluss der Badewanne und den Ablaufanschluss der Badewanne miteinander verbindet;
eine Wasserpumpe (52), die mit der Ablaufanschluss der Badewanne verbunden ist, um Wasser durch den Wasserströmungsweg zu pumpen;
eine Wärmepumpe (70), die zur Temperaturkonditionierung des Badewassers in den Wasserströmungsweg eingebunden ist;
wobei der Wasserströmungsweg einen Wasserumgehungsweg (60D) beinhaltet, um Wasser zum Einlass umzuleiten, bevor es die Wärmepumpe erreicht;
ein Durchflussregelventil (80), das im Wasserrückführungsweg stromabwärts des Wasserumgehungswegs und stromaufwärts der Wärmepumpe angeordnet ist;
wobei das Durchflussregelventil Folgendes umfasst:
ein Gehäusegebilde (80A, 80B), das einen Wasserzulaufanschluss (82A) und einen Wasserablaufanschluss (82B) aufweist;
ein Haltergebilde (86), das in einer festen Position im Inneren des Gehäusegebildes angeordnet ist, wobei das Haltergebilde ein Quergebilde (86C) mit einer oder mehreren Halteröffnungen (86E) beinhaltet;
ein Kolbengebilde (84), das im Inneren des Gehäusegebildes angeordnet ist und zur Gleitbewegung im Inneren des Haltergebildes zwischen einer offenen Stellung relativ zum Haltergebilde und einer geschlossenen Stellung relativ zum Haltergebilde ausgebildet ist, wobei das Kolbengebilde eine oder mehrere Kolbenöffnungen (84B) definiert;
ein Vorspanngebilde (88), das zum Vorspannen des Kolbengebildes zur offenen Stellung ausgebildet ist, in der Wasserdurchfluss durch die eine oder mehreren Kolbenöffnungen und die eine oder mehreren Halteröffnungen vom Zulaufanschluss zum Ablaufanschluss ermöglicht ist, und das so ausgebildet ist, dass es das Kolbengebilde als Reaktion auf einen auf den Zulaufanschluss angewendeten erhöhten Wasserdruck innerhalb des Haltergebildes gleiten lässt, so dass das Kolbengebilde als Reaktion auf einen ausreichend erhöhten Druck zur geschlossenen Stellung hin gleiten kann, wobei der Wasserdurchfluss durch die eine oder mehreren Halteröffnungen verhindert wird,
wobei der Wasserdurchfluss durch das Ventil in Abhängigkeit von dem auf das Ventil angewendeten Wasserdruck dynamisch geregelt wird;
wobei bei zunehmendem auf das Durchflussregelventil angewendetem Wasserdruck eine in den Wasserumgehungsweg umgeleitete Wassermenge zunimmt, um den Wasserdurchfluss zur Wärmepumpe zu verringern, wobei das Ventil dazu dient, den Wasserdurchfluss zur Wärmepumpe auf einem vorgegebenen Durchfluss für einen effizienten Betrieb der Wärmepumpe zu halten und zu verhindern, dass der Wasserdurchfluss zur Wärmepumpe einen vorbestimmten maximalen Wasserdurchfluss überschreitet, was zu einer Beschädigung der Wärmepumpe führen würde.

2. Badevorrichtung nach Anspruch 1, wobei das Gehäusegebilde einen zylindrischen Gehäuseteil beinhaltet, in dem das Haltergebilde und das Kolbengebilde angeordnet sind.

3. Badevorrichtung nach Anspruch 2, wobei:
das Haltergebilde eine Halterzylinderfläche (86H) beinhaltet, die so dimensioniert ist, dass sie in den zylindrischen Teil des Gehäusegebildes passt, wobei das Haltergebilde (86C) sich über die Halterzylinderfläche erstreckt;
das Kolbengebilde eine äußere Zylinderfläche (84H), die für Gleitsitz mit einer Toleranz in die Halterzylinderfläche passt, und eine innere Zylinderfläche (84J) mit einem distalen Ende (84J1) beinhaltet, das so ausgebildet ist, dass es bei in der geschlossenen Stellung befindlichem Kolbengebilde mit dem Quergebilde in Kontakt ist.

4. Badevorrichtung nach Anspruch 3, wobei das Kolbengebilde (84) ferner Folgendes beinhaltet:
ein Quersteggebilde (84A), das sich über die genannte innere Zylinderfläche (84H) erstreckt, wobei das genannte Quersteggebilde die genannte(n) eine oder mehrere Kolbenöffnungen definiert, durch die bei nicht in der geschlossenen Stellung befindlichem Kolbengebilde Wasser durch die innere Zylinderfläche fließt.

5. Badevorrichtung nach Anspruch 4, wobei:
das Vorspanngebilde (88) eine Feder ist;
das Quergebilde des Haltergebildes einen vorspringenden mittleren Vorsprungsteil (86D) mit einem Federhalterzapfen (86F), der sich in Richtung der Einlassöffnung erstreckt, beinhaltet;
das Steggebilde (84A) einen Kolbenfederzapfen (84K), der sich in Richtung des Quergebildes (86C) erstreckt, beinhaltet;
die Feder ein erstes Ende, das auf den Kolbenfederzapfen aufgesetzt ist, und ein zweites Ende, das auf den Halterfederzapfen aufgesetzt ist, hat.

6. Badevorrichtung nach einem der vorhergehenden Ansprüche, wobei die Pumpe eine für mehrere Drehzahlen ausgelegte Pumpe ist, die mit mehreren Pumpendrehzahlen betrieben werden kann.

7. Badevorrichtung nach Anspruch 6, wobei die für mehrere Drehzahlen ausgelegte Pumpe eine für zwei Drehzahlen ausgelegte Pumpe ist, die eine niedrige Pumpendrehzahl und eine hohe Pumpendrehzahl aufweist, und für den Betrieb bei niedriger Pumpendrehzahl das Durchflussregelventil (80) für das Regulieren des Wasserdurchflusses zur Wärmepumpe auf einen Nennwert plus/minus einer Nenn-Toleranz ausgelegt ist, wobei der Nennwert für einen effizienten Betrieb der Wärmepumpe ausgewählt ist, und für den Betrieb bei hoher Drehzahl das Durchflussregelventil für das Regulieren des Wasserdurchflusses zur Wärmepumpe ausgelegt ist, so dass er unter einer vorbestimmten Durchflussrate liegt, die zu einer Beschädigung der Wärmepumpe führen kann.

8. Badevorrichtung nach Anspruch 7, wobei die Nenntoleranz zehn Prozent des Nennwerts beträgt.

9. Badevorrichtung nach einem der vorstehenden Ansprüche, die ferner eine Steuereinheit, ein im Rücklaufströmungsweg angeordnetes Elektrodenheizelement und ein Bedienfeld (56), das auf Benutzereingaben reagiert, umfasst und wobei die Steuereinheit auf die Benutzereingaben reagiert und die Steuereinheit mit der Wärmepumpe (70) und dem Elektrodenheizelement verbunden ist und zum Steuern des Betriebs der Wärmepumpe und des Elektrodenheizelements ausgebildet ist.

10. Badevorrichtung nach Anspruch 9, wobei das Wasser der Badevorrichtung durch das Elektrodenheizelement oder durch die Wärmepumpe oder durch beide unter der Steuerung des Steuerteils erwärmt werden kann.

## Revendications

1. Installation de bain comprenant :
une baignoire (10) pour contenir l'eau de bain et comprenant un ou plusieurs orifices d'entrée d'eau et un orifice de sortie d'eau ;
un circuit d'écoulement d'eau de recirculation (60) raccordant l'orifice d'entrée de la baignoire et l'orifice de sortie de la baignoire ;
une pompe à eau (52) raccordée à l'orifice de sortie de la baignoire pour pomper l'eau à travers le circuit d'écoulement d'eau ;
une pompe à chaleur (70) raccordée au circuit d'écoulement d'eau pour conditionner la température de l'eau de bain ;
le circuit d'écoulement d'eau comprenant un circuit de dérivation d'eau (60D) pour détourner l'eau à l'orifice d'entrée avant d'atteindre la pompe à chaleur ;
une soupape de contrôle d'écoulement (80) positionnée dans le circuit d'écoulement d'eau de recirculation en aval du circuit de dérivation d'eau et en amont de la pompe à chaleur ;
la soupape de contrôle d'écoulement comprenant :
une structure de boîtier (80A, 80B) ayant un orifice d'entrée d'eau (82A) et un orifice de sortie d'eau (82B) ;
une structure de retenue (86) positionnée dans une position fixe à l'intérieur de la structure de boîtier, la structure de retenue comprenant une structure transversale (86C) comprenant une ou plusieurs ouvertures de retenue (86E) ;
une structure de plongeur (84) positionnée à l'intérieur de la structure de boîtier et configurée pour mouvement coulissant à l'intérieur de la structure de retenue entre une position ouverte par rapport à la structure de retenue et une position fermée par rapport à la structure de retenue, la structure de plongeur définissant une ou plusieurs ouvertures de plongeur (84B) ;
une structure de sollicitation (88) configurée pour solliciter la structure de plongeur vers la position ouverte dans laquelle l'eau est admise à travers l'une ou plusieurs ouvertures de plongeur et l'une ou plusieurs ouvertures de retenue de l'orifice d'entrée à l'orifice de sortie, et est configurée pour permettre à la structure de plongeur de coulisser dans la structure de retenue en réponse à une plus grande pression d'eau appliquée à l'orifice d'entrée, permettant à la structure de plongeur de coulisser vers la position fermée en réponse à une pression suffisamment augmentée, dans laquelle l'écoulement d'eau à travers l'une ou plusieurs ouvertures de retenue est empêché,
dans laquelle l'écoulement d'eau à travers la soupape est régulé dynamiquement en fonction de la pression d'eau appliquée à la soupape ;
dans laquelle au fur et à mesure que la pression d'eau appliquée à la soupape de contrôle d'écoulement augmente, une quantité d'eau détournée vers le circuit de dérivation d'eau augmente afin de réduire l'écoulement d'eau vers la pompe à chaleur, la soupape servant à maintenir l'écoulement d'eau vers la pompe à chaleur à un écoulement donné pour le fonctionnement efficace de la pompe à chaleur, et pour empêcher que l'écoulement d'eau vers la pompe à chaleur ne dépasse un écoulement d'eau maximal prédéterminé ce qui endommagerait la pompe à chaleur.

2. Installation de bain selon la revendication 1, dans laquelle la structure de boîtier comprend une partie de boîtier cylindrique dans laquelle la structure de retenue et la structure de plongeur sont positionnées.

3. Installation de bain selon la revendication 1, dans laquelle :
la structure de retenue comprend une surface cylindrique de retenue (86H) dimensionnée pour s'adapter dans la partie cylindrique de la structure de boîtier, la structure transversale (86C) s'étendant à travers la surface cylindrique de retenue ;
la structure de plongeur comprend une surface cylindrique externe (84H) configurée pour s'adapter de manière coulissante dans la surface cylindrique de retenue avec une tolérance, et une surface cylindrique interne (84J) ayant une extrémité distale (84J1) configurée pour entrer en contact avec la structure transversale avec la structure de plongeur dans la position fermée.

4. Installation de bain selon la revendication 3, dans laquelle la structure de plongeur (84) comprend en outre :
une structure à âme transversale (84A) s'étendant à travers ladite surface cylindrique interne (84H), ladite structure à âme transversale définissant ladite une ou lesdites plusieurs ouvertures de plongeur à travers lesquelles l'eau coule à travers la surface cylindrique interne lorsque la structure de plongeur n'est pas dans la position fermée.

5. Installation de bain selon la revendication 4, dans laquelle,
la structure de sollicitation (88) est un ressort ;
la structure transversale de la structure de retenue comprend une partie bombée centrale en saillie (86D) avec un plot de retenue de ressort (86F) s'étendant vers l'ouverture d'entrée ;
la structure à âme (84A) comprend un plot de ressort de plongeur (84K) s'étendant vers la structure transversale (86C) ;
le ressort ayant une première extrémité montée sur le plot de ressort de plongeur et une deuxième extrémité montée sur le plot de ressort de retenue.

6. Installation de bain selon l'une quelconque des revendications précédentes, dans laquelle la pompe est une pompe à vitesses multiples opérationnelle à une pluralité de vitesses de pompe.

7. Installation de bains selon la revendication 6, dans laquelle la pompe à vitesses multiples est une pompe à deux vitesses ayant une petite vitesse de pompe et une grande vitesse de pompe, et dans laquelle pour le fonctionnement de la pompe à petite vitesse, la soupape de contrôle d'écoulement (80) est configurée pour réguler l'écoulement d'eau vers la pompe à chaleur à une valeur nominale plus/moins une tolérance nominale, la valeur nominale étant sélectionnée pour le fonctionnement efficace de la pompe à chaleur, et pour le fonctionnement de la pompe à grande vitesse, la soupape de contrôle d'écoulement est configurée pour réguler l'écoulement d'eau vers la pompe à chaleur pour qu'il soit moins qu'un débit prédéterminé qui pourrait endommager la pompe à chaleur.

8. Installation de bain selon la revendication 7, dans laquelle la tolérance nominale est de dix pour cent de la valeur nominale.

9. Installation de bain selon l'une quelconque des revendications précédentes, comprenant en outre un contrôleur, un élément chauffant à électrode placé dans le circuit d'écoulement de recirculation, et un tableau de commande (56) responsif à des commandes d'entrée utilisateur, et dans laquelle le contrôleur est responsif aux commandes d'entrée utilisateur, et le contrôleur est raccordé à la pompe à chaleur (70) et à l'élément chauffant à électrode et configuré pour contrôler le fonctionnement de la pompe à chaleur et de l'élément chauffant à électrode.

10. Installation de bain selon la revendication 9, dans laquelle l'eau de l'installation de bain peut être chauffée par l'élément chauffant à électrode ou par la pompe à chaleur, ou les deux, sous le contrôle du contrôleur.
